# EUROPEAN PATENT APPLICATION

(11) **EP 1 582 097 A1**
(43) Date of publication of application: **05.10.2005**
(21) Application number: 04076060.5
(22) Date of filing: 02.04.2004
(51) Int. Cl.: A21D 2/16, A21D 10/00, A21D 8/04, A23D 9/00

(54) **Bread Improver**

(71) Applicant: Bakery Technology Centre B.V., 4845 CR Wagenberg (NL)
(72) Inventor: De Levita, Paul David, 3972 EE Driebergen-Rijsenburg (NL); Sturkenboom, Marcellus Gerardus, 3991 PX Houten (NL); Van Duijnhoven, Antonius Adrianus Gerardus, 4845 CR Wagenberg (NL)
(74) Representative: Winckels, Johannes Hubertus F.

(57) **Abstract**

The present invention relates to a method for preparing an oil-based bread improver concentrate in the form of a dispersion, comprising mixing a liquid oil with a dispersion of a solid fatty substance in a liquid oil. The invention further relates to a bread improver and to a method for baking a dough based product, such as bread or pastry, comprising adding the bread improver to the dough and/or to the pan.

## Description

The invention relates to a method for preparing an oil-based bread improver.

Bread improvers are compositions used in the bakery industry intended to improve the quality of a baked product such as bread. Bread improvers may be in a liquid form, such as in the from of an oil based dispersion, a water in oil emulsion or oil in water emulsion or in the form of a solution /dispersion of enzymes in a glycerol/water mixture.

Besides oil, an oil based bread improver may comprise various (non soluble) additives, for instance emulsifiers, flavouring agents, enzymes, antioxidants, vitamins, etc.

In order to stabilise such additives it has been proposed in EP-A 1,214,888 to include high melting fats in the bread improver. This publication describes a liquid bread improver comprising a liquid oil, a triglyceride fat and a particulate component comprising a high melting point emulsifier and a bread improver additive. Such a bread improver is typically prepared by heating the oil to a temperature above the melting temperature of the high melting fat and adding the fat in an amount of up to 10 %. After dissolving the fat, the mixture is rapidly chilled to 3-5 °C such that the fat recrystallises. Thereafter, the crystallised blend is typically matured for a while, after other powdered ingredients may be added.

Such preparation requires relatively complicated equipment and high amounts of energy (in particular for heating and for chilling). Further, during chilling, spots of condensed water, comprising nutrients, may form at parts of the equipment. Such spots may give rise to growth of microbes, which impart a health risk.

It is an object of the present invention to provide an alternative for known methods of preparing a bread improver, in particular a method that is efficient with respect to its energy consumption and/or that may be employed using simple equipment.

It has now surprisingly been found that it is possible to prepare a bread improver from a bread improver concentrate comprising oil and fat, which concentrate may be used to prepare a fluid bread improver without having to heat the ingredients to a temperature above the melting temperature of the fatty substance.

Accordingly, the present invention relates to a method for preparing a fluid bread improver, comprising mixing a liquid oil with a bread improver concentrate - said concentrate comprising a liquid oil and dispersed therein particles of a solid fatty substance and optionally particles of at least one additional food-grade component - in an effective ratio to provide the fluid bread improver.

Further, the invention relates to a oil based bread improver concentrate, comprising particles of a solid fatty substance, a liquid oil phase, and optionally particles of at least one additional food-grade component (hereafter also referred to as "additive"). Preferably, the bread improver concentrate has a high consistency - such as a solid - and/or has a weight ratio of the fatty substance particles to the oil phase of at least about 20:80.

The term "oil based" is used herein for a composition/concentrate comprising a liquid phase which is formed by an oil. The term "oil" as used herein includes edible oil mimetic components, i.e. liquid components that have oil-like properties.

In particular the term "oil based composition" is used to describe a composition (the concentrate/bread improver) which is essentially free of an aqueous phase. Preferably, the term "oil based" composition is used to describe a composition which is essentially free of water, or at most comprises traces of water, *e.g.* in a weight percentage of less than 5 wt. %, based on the weight of the total composition, more preferably less than 1 wt.%, based on the weight of the total composition, even more preferably less than 0.5 wt. %, based on the weight of the total composition.

The term "solid" is used herein to describe a material that is not liquid and not gaseous at ambient room temperature (*e.g.* 25 °C), *i.e.* a substance that essentially remains its form (i.e. does not visibly flow) in the absence of externally applied forces. The solid may very suitably have a consistency at about 15 °C equal to or higher than table margarine or a consistency at about 15 °C equal to or less than frying fat.

A solid substance may be crystalline, amorphous or a paste. The particles of the fatty substance preferably contain the fatty substance in a crystalline phase.

A bread improver concentrate according to the invention is usually a pourable composition or a solid composition. The consistency of a bread improver concentrate according to the invention - as indicated by the Bostwick value (where applicable) - is generally less than about 20 cm per 30 sec. For a pourable composition, the Bostwick value is preferably at least about 1 cm per 30 sec. A value in the range of about 3-20 cm per 30 sec is very suitable for a pourable composition. When a high consistency is desired, the Bostwick value is preferably less than 1 cm per 30 sec, more preferably 0-0.5 cm per 30 sec, even more preferably less than 0.1 cm per 30 sec.

The fluid bread improver, usually has a Bostwick value of more than 1 cm/30 sec, preferably of more than 3 cm/30 sec, even more preferably of more than 4 cm/30 sec.

The Bostwick value is the distance which a sample of the composition flows under its own weight in 30 seconds at 20 °C, as determinable in a Bostwick consistometer.

It has been found very practical to provide a solid bread improver concentrate in a shaped form, such as a block form. This is quite practical with respect to storage and transport of the concentrate.

Alternatively, the bread improver concentrate may be a pourable composition, generally of a relatively high viscosity, when compared to a common fluid bread improver. It has been found that a pourable composition is particularly attractive for its ease of use, for instance when preparing a fluid bread improver from the concentrated composition.

A bread improver concentrate according to the invention may be used directly (in particular in case the concentrate is pourable) or may very suitably serve as a concentrate for a "ready to use" (fluid) bread improver, as will be described in detail below.

The inventors have realised that it is possible and in fact very interesting to prepare a bread improver concentrate - in particular a concentrate in the form of a solid dispersion - which at a later stage (*e.g.* at a different manufacturing site) may be diluted to a final (fluid) bread improver

An advantage of using such a concentrate includes the low cost regarding investment in mixing equipment for the manufacturer of the final bread improver (no heaters/coolers required), ease of use (one can simply mix the concentrate (optionally including additives) purchased from the supplier of the concentrate with locally purchased oil), savings in transportation costs (due to the lower volume of the concentrate, compared to a final bread improver and the fact that the oil can be purchased locally).

A bread improver concentrate according to the invention allows a reduction in stock volume. In particular a particular concentrate may serve as a concentrate for a variety of bread improvers, *e.g.* with different ingredients and/or different levels of ingredients, *e.g.* of hard glycerides. For this purpose only one type of bread improver concentrate may be stored until it is mixed on demand to prepare a final bread improver.

The bread improver concentrate according to the invention in the form of a dispersion, may very suitably be prepared by mixing the solid fatty substance with a liquid oil thereby obtaining a dispersion of the oil and particles of the fatty substance, *e.g.* as described in EP-A 1,214,888.

The mixing may very conveniently be carried out at a temperature above the melting temperature of the solid fatty substance (for instance 5-25 °C above the melting temperature), allowing the fatty substance to melt, and thereafter cooling the mixture below the crystallisation temperature of the fatty substance to allow crystallisation of the fatty substance. The crystallisation may for instance be carried out under kneading and working in a Votator while cooling to a temperature of about 20-32 °C. After crystallisation the mixture may be fluidised with (mild) stirring for about an hour or more, usually at a temperature of about 25-35 °C. The additional particulate component, may suitably be added after crystallisation and the fluidisation stage. The additional particulate component may suitably be added at ambient temperature (usually below 35 °C) while mixing, preferably for at least 30 min, more preferably for up to 4 hours. The skilled person will know how to choose suitable conditions depending upon the exact ingredients, using the information disclosed herein and common general knowledge.

A weight ratio of solid fatty substance to the liquid oil of more than 20:80, in particular provides a satisfactory amount of particles of fatty substance, capable of stabilizing one or more other particulate materials which may be present or added later.

From a view point of savings in storage space and transportation costs, it is preferred that the ratio of solid fatty substance to liquid oil is at least about 25:75, more preferably at least about 30:70, even more preferably at least about 35:65.

For providing a solid dispersion, having a highly satisfactory shape stability (*e.g.* allowing piling a plurality of articles of the concentrate (such as blocks) on top of one another), it is preferred that the ratio is at least about 35:65, in particular if an additional particulate component is absent or present in a very low concentration (*e.g.* less than 1 % based on the total weight of the concentrate). It will be clear to the skilled person that a lower amount of fatty substance may be sufficient in case one or more additional particulate component are present. He will be able to adjust the ratio of the different components (oil: fatty substance : further additives) based upon common general knowledge and the information disclosed herein to obtain a suitable solid concentrate, if desired.

The weight ratio of solid fatty substance to the liquid oil in the bread improver concentrate is preferably less than 70:30, in particular for providing an advantageous storage stability of the dispersed particles in the concentrate.

From a manufacturing point of view (easy mixing of fatty substance and oil in the preparation of the concentrate or in a dilution prior to use), a weight ratio of solid fatty substance to liquid oil is preferably less than about 50:50, more preferably less than about 45:55.

The size of the particles of the fatty substance, is not particularly critical. No special treatment is necessary to provide a suitable diameter. In practice, it is preferred that at least the majority of the particles has a diameter of at least about 1 µm and less than about 1000 µm. With respect to stabilising an additional component in the concentrate (or the fluid bread improver) very good results have been obtained with an embodiment wherein at least the majority of the particles have a size of less than about 200 µm. An embodiment wherein at least the majority of the particles have a size of less than about 50 µm has been found very advantageous to provide a fluid bread improver.

As a solid fatty substance for the fatty particles in principle any fatty substance, allowable in a food application, having a melting temperature above ambient conditions may be used, *e.g.* such as described in EP-A 1,214,88, in particular paragraphs 0012-0014, which paragraphs are incorporated herein by reference. For practical reasons, the melting temperature is preferably at least about 50 °C, more preferably at least about 60 °C. This allows a good storage stability. The melting temperature as used herein is the melting temperature as determinable by "AOCS Official Method Cc 3b-92 Slip Melting Point".

Preferred solid fatty substances in an embodiment of the invention include solid fats of animal or vegetable origin, solid waxes, solid paraffins and solid sterols (in particular sitosterols).

Much preferred fats of animal or vegetable origin include triglycerides, such as triglyceride fats esterified with one or more acids having a chain length of about 4-24 carbon atoms.

Especially preferred are hardened triglycerides (including hardened triglyceride oils). An advantage of a hardened triglyceride is its suitability to provide a bread improver concentrate with a desirable solid constitution, *e.g.* comparable to a margarine or fat for deep frying. Good results have further been achieved with low fat/no fat substances such as Olestra.

Triglycerides are considered hardened if at least a part of the acid chains are fully saturated. In particular hardened triglycerides preferably have a iodine value of less than about 10 (as determinable by "AOCS Recommended Practice Cd 1b-87,Iodine value of fats and oils Cyclohexane Method").

Very good results have been achieved with triglycerides having a iodine value of less than about 5, more in particular of less than about 1. Particles of such triglycerides in a concentrate according to the invention have been found to be particularly advantageous with respect to their function as stabilisers for an particulate additive.

A highly preferred of a hardened triglyceride of vegetable origin is hardened palm oil fat. Other preferred fats include hardened rapeseed oil, hardened sunflower seed oil, hardened soy bean oil, hardened fish oil, hardened maize oil, hardened peanut oil, hardened safflower oil, hardened olive oil, derivatives and mixtures thereof.

A wax has been found particularly suitable as a solid fatty substance in a bread improver concentrate suitable for preparing a fluid bread improver with very favourable spraying characteristics. Highly suitable waxes include waxes of plant or animal origin, in particular Carnauba wax, Jojoba wax, beeswax, sugar cane wax, bayberry wax and Candellilla wax. Particularly good results have been obtained with Carnauba wax.

As an oil any food grade oil may be used, *e.g.* as described in EP-A 1,214,888, in particular paragraphs 0009-0011, which paragraphs are incorporated herein by reference.

As an oil, a vegetable oil is preferred, in particular a glyceride oil, more in particular a triglyceride oil. The oil preferably has a iodine value of 20 to 210, more preferably of 80 to 140.

Preferred oils include sunflowerseed oil, soy bean oil, safflower oil, olive oil, peanut oil, rapeseed oil, maize oil, cotton oil, olein fractions of natural oil, in particular palm oil olein, interesterified oils and derivatives and mixtures thereof.

Good results have further been achieved with so called liquid medium-short chain triglycerides (MCT). MCT's usually comprise C8-C10 hydrocarbon chains, which chains are usually saturated. A bread improver (concentrate) comprising one or more MCT's has been found to have a particularly good storage stability.

Preferred examples of edible oil mimetic components include low fat/no fat substances, such as fat replacing sugar esters, for instance Olestra™ or another low-fat frying medium.

Further, emulsifiers such as lecithin, sorbitan mono-fatty acid esters (such as sorbitan-oleate, sorbitan-laurate), polysorbate, diacetyl tartaric esters of fatty acid mono or diglycerides, sucrose esters of fatty acids are suitable as an oil mimetic component. If used as such, they are preferably used in combination with a glyceride oil and/or a low fat/no fat substance..

In a bread improver concentrate according to the invention, preferably one or more (food grade) additives are present in a particulate form, *e.g.* as described in EP-A 1,214,888, in particular paragraphs 0023-0024, which paragraphs are incorporated herein by reference.. Such additives are usually poorly soluble *(i.e.* typically having a solubility in the oil and the fatty substance of less than 10 wt. % based upon the total weight, at ambient temperature; preferably of less than 5 wt. %) or even poorly dispersible in an oil. Thus in a known bread improver most of the additive remains undissolved after addition and tends to sag very easily, leading to poor storage stability in a conventional bread improver.

However, in combination with the particles of the fatty substance, in particular with a wax or hardened triglyceride, a very stable oil based dispersion has been found feasible, even after dilution of the (solid) pan release concentrate into an oil (thereby forming a fluid bread improver). It has been found possible in accordance with the invention to provide a good storage stability, even in the absence of added emulsifiers to the additional particulate component(s). A concentrate is considered storage stable if it is still suitable for use after at least about 4 weeks about storage at ambient temperature (such as exist in a bakery). The stability may be improved by adding a dispersing agent such as a partially hardened fat or a fraction of an oil or fat such as a fraction of palm oil/

If desired, the additional particulate component(s) may comprise one or more emulsifiers (*e.g.* high melting esters of mono- and/or diglycerides, such as diacetyl tartaric esters of saturated mono- and/or diglycerides and Calcium or Sodium Lactylates). Such emulsifier may be present in the additional particulate component in a concentration of about 0.1-40 wt. % based upon the weight of the additional particulate component, preferably in a concentration of less than 3 wt. %.

In general, the majority of the additive particles have a diameter (as determined by a Malvern Laser Particle Counter) of at least about 10 µm, preferably at least about 200 µm, up to about 1000 µm.

For a good stability (low sedimentation, in particular after mixing the concentrate, thereby forming a fluid bread improver), preferably at least 50 % of the additive particles has a diameter of less than 700 µm.

Preferred examples of additive particles are selected from the group consisting of proteins, enzymes, starches, sugars (in particular lactose), salts of organic acids, salts of inorganic acids (*e.g.* NaCl, a carbonate) and foodstuffs, in particular one or more foodstuffs selected from milk powder, soy meal, soy extracts, soy concentrates, malts, yeasts, yeast extracts, whey powder and whey isolates.

Preferably particles of a pH-controlling agent are present in a bread improver (concentrate) according to the invention. Preferred are organic acids - in particular citric acid or acetic acid - and inorganic acids, such as a hydrogen phosphate, in particular monocalcium phosphate.

In a particularly preferred embodiment of the invention, at least one enzyme is present.

Preferably the bread improver (concentrate) comprises at least one enzyme selected from, amylases - including maltogenic amylases - phospholipases, proteases - including peptidases - amylo-glucosidases, cellulases, glucose-oxidases, glycolipases, hemicellulases, lipases, mannases, pentosanases and xylanases.

The presence of an enzyme in the bread improver, has been found to contribute positively to the organoleptic properties and/or the visual appearance of bread prepared with the aid of the bread improver.

A preferred bread improver (concentrate) comprises a maltogenic amylase, at least one other amylase, a phospholipase, a protease and at least one additional enzyme selected from the group consisting of amylo-glucosidases, cellulases, glucose-oxidases, glycolipases, hemicellulases, lipases, mannases, peptidases, pentosanases and xylanases When used in bread, such bread improver has been found particularly suitable for improving the shelf-life. Suitable compositions for this purpose are known from US 2004/0028773 A1, which is inorporated herein by reference, in particular paragraphs 0019-0029, 0032 and 0033 - relating to preferred enzymes - and paragraph 0034 for preferred concentration ranges.

Other examples of additive particles include bread improvers such as emulsifiers, hydrocolloids, flavours, reductants, minerals, vitamins, sweeteners, baking powders, flour, colouring, spices, herbs, gluten, preservatives, antioxidants and fibres.

Additives such as sugars, foodstuffs and/or other products that can perform a Maillard reaction may be added for imparting a natural flavour effect.

Preferably, an effective amount of an antimicrobial agent is present in the bread improver concentrate or the fluid bread improver. Very good results have been achieved with a bread improver comprising one or more antimicrobial agents selected from the group consisting of acetic acid, citric acid, sorbic acid, benzoic acid, salts of any of these acids and esters of any of these esters.

Preferably an effective amount of an antioxidant is present, for instance propyl gallate, TBHQ, BHT, BHA or a combination thereof

The skilled person will know to determine suitable amounts for any of the additives, based upon common general knowledge and the information disclosed herein and the intended use depending on the function and the type of additive. Enzymes are examples where typically relatively low levels are used and starches are examples where typically relatively high levels are used. The total amount of additives in particulate form (i.e. not including the particles of the fatty substance) is preferably at least 0.1 wt. %, based on the total weight of the concentrate, more preferably at least 0.5 wt. %. For practical reasons, the total amount of the additives in particulate form is preferably less than about 15 wt.% based on the total weight of the concentrate.

A bread improver concentrate according to the invention may be directly used in the manufacture of a baked product or may be used to prepare a fluid bread improver (see also above).

The preparation of a fluid bread improver, preferably comprises mixing the bread improver concentrate (comprising the solid fatty substance), with a liquid oil in an effective ratio to provide the fluid bread improver, plus optionally additives, at a temperature below the melting point of the fatty substance.

Alternatively, one may prepare the fluid bread improver by mixing the oil and a relatively low amount of fatty substance in one step at a temperature below the melting point of the fatty substance. The concentration of fatty substance then typically does not exceed 20 % based on the combined weight of fatty substance and oil.

By mixing of solid fatty substance and oil at a temperature below the melting temperature of the solid fatty substance, it has been possible to prepare a fluid oil based bread improver in an energetically efficient way.

In addition, it has been found that preparing a bread improver in accordance with the invention has a positive effect on the quality of the bread improver, in particular with respect to its storage stability. It is thought that this is due to the relatively low temperature at which the preparation is typically carried out. After all, the oil (which may be heat sensitive), which is mixed with the bread improver concentrate or the fatty substance does not have to be heated or is only heated to a point below the melting point of the fatty substance.

Further, a method for preparing a fluid bread improver according to the invention can be carried out using very simple equipment. In principle, a conventional mixer suffices. No cooling and/or heating apparatus are required. Of course, one may use such equipment, to (moderately) heat or cool, if one so desires. The heater may for instance be used to heat the oil during the preparation of the fluid bread improver to a temperature between ambient and the melting temperature of the solid fatty substance, preferably to a temperature of more than 10 °C below the melting temperature of the solid fatty substance. More preferably the mixing is carried out at a temperature of at least about 20 °C below the melting temperature of the solid fatty substance.

Very good results have been achieved with a method for preparing the fluid bread improver, wherein the mixing takes place at a temperature of less than about 40°C, in particular at a temperature of less than about 30 °C. For practical reasons, the mixing temperature should generally be higher than the melting temperature of the oil, preferably at least about 15 °C, more preferably at least ambient room temperature.

The oil is preferably a vegetable oil such as specified above for a suitable oil in the oil phase of the (solid) oil based releasing agent concentrate, in particular a vegetable triglyceride oil, more in particular soy oil, sunflower oil or another of the above mentioned preferred vegetable oils, including mixtures thereof.

The amount of oil used, is preferably such that the weight ratio of oil (including the oil of the solid bread improver concentrate) to fatty substance particles in the fluid bread improver is about 99.5:0.5 to about 80:20, more preferably about 99:1 to about 90:10, even more preferably about 97:3 to about 95:5.

The amount of particulate additives in the fluid bread improvers is usually at least about 0.1 wt. % based on the total weight, preferably between 0.5 and 60 wt.% based on the total weight more preferably between 1 and 30 wt. %, more preferably between 3 and 20 wt. %. Such concentration may be achieved by adding (additional) additive particles to the oil, prior to, during or after mixing the oil and the bread improver concentrate.

The invention further relates to a fluid bread improver, obtainable by a method according to the invention. It has been found that such an agent is characterised by a particularly good storage stability. Further it has been found that the amount of oxidised oil components is relatively low.

A fluid bread improver according to the invention usually comprises (i) about 30-94 wt. % based upon the total weight of the improver, of oil, (ii) about 1-10 wt. % based on the total weight of the improver of fatty substance and (iii) 0-60 wt. %, based on the total weight of additional food-grade component. A preferred amount of the additional food-grade component(s) depends upon the component(s) used. The skilled person will be able to determine suitable and preferred amounts, based upon common general knowledge. In practice, very good results have been achieved with a total additional food-grade components content of about 3-30 wt. %.

The invention further relates to a method for baking a dough based product, such as bread or pastry, wherein the bread improver concentrate or fluid bread improver according to the invention is added to the dough and/or used in the preparation of the dough (by mixing it with the dough ingredients).

The skilled person will be able to choose suitable baking conditions based on the information disclosed herein and common general knowledge, in particular with respect to the dough formulation, the baking time and the baking temperature.

The invention is further illustrated by the following examples.

### Example 1: Liquid bread improver for improving volume of bread

In this example a method of making a liquid bread improver by mixing 1) a blend containing the hard fat component and an enzyme mixture with 2) the liquid oil , ascorbic acid and dextrose.

### Equipment:

Hobart type 506
Laboratory stirrer IKA Type RW 16 basic

### Hard fat containing concentrate for improving volume of bread

30.0 wt.% Hardened Palm oil
2.5 wt.% Doughase 300 (ex IBT)
1.0 wt. % Fungamyl 2500 (ex Novozymes)
3.5 wt. % Capzyme 5000 (ex IFT)
63.0 wt. %% Sunflower oil

Firstly, the hardened palm oil is dissolved in heated sunflower oil. The hardened palm oil is added at an oil temperature of approximately 60 °C. This is done by heating the mixtures in a beaker whilst stirring.

When the solution is clear and no particles are visible the mixture is poured in the Hobart that is equipped with a paddle normally used for instance shortbread doughs. The Hobart is stirred with speed 2 till the mixture is at least cooled down to room temperature.

The homogeneous mixture is than transferred in a glass beaker. The material is than stirred for at least 2 and preferably more hours so that the mixture is more smooth looking.

This concentrate can be used directly or first diluted to improve the volume of bread.

### Liquid bread improver for improving volume

The liquid bread improver was prepared by mixing the concentrate with oil (such as sun flower oil), ascorbic acid and dextrose, to the following final concentrations:
10.0 wt.% concentrate for volume
1.0 wt.% ascorbic acid
10.0 wt.% dextrose
79.0 wt.% oil

### Example 2. Liquid bread improver for increasing softness of bread

In this example the hard fat containing component does not contain enzymes. The liquid improver is again produced as described in Example 1 by mixing the hard fat containing concentrate with the oil, Novomyl 1000, Bakezyme P200, Capzyme 4000, Doughase 400 and Ascorbic acid together.

### Hard fat containing component

30.0 wt.% hardened palm oil
70.0 wt.% sunflower oil

### Liquid bread improver for softness

10.0 wt. % hard fat containing concentrate
0.5 wt. % Novomyl 1000 (ex Novozymes)
0.1 wt. % Bakezyme P200 (ex DSM)
1.0 wt. % Capzyme 4000 (ex IFT)
0.5 wt. % Doughase 400 (ex IBT)
0.5 wt. % Ascorbic acid
87.4 wt. % Sunflower oil

## Claims

**1.** Method for preparing a fluid bread improver, comprising mixing a liquid oil with a bread improver concentrate - said concentrate comprising a liquid oil and dispersed therein particles of a solid fatty substance and optionally particles of at least one additional food-grade component - in an effective ratio to provide the fluid bread improver.

**2.** Method according to claim 1, wherein the mixing takes place at a temperature below the melting point of the fatty substance, preferably below 35 °C.

**3.** Method according to claim 1 or 2, wherein the additional component is present in the concentrate, is added to the oil and/or is added to the mixture of oil and fatty substance; and wherein said additional component is selected from the group consisting of proteins, enzymes, starches, acids, vitamins, salts of organic acids, salts of inorganic acids, flavours, emulsifiers, hydrocolloids, reductants, proteins, minerals, sweeteners, baking powders, flour, colorants, spices, herbs, gluten, preservatives, fibres and foodstuffs (in particular milk powder, soy meal, soy extracts, soy concentrates, malts, yeasts, yeast extracts, whey powder, whey isolates).

**4.** Method according to any one of the claims 1-3, wherein the amount of oil used is such that the weight ratio of oil (including the oil of the bread improver concentrate) to solid fatty substance in the fluid bread improver is about 99.5 : 0.5 .. to about 80:20, preferably about 99:1 to about 95:5.

**5.** Method according to any one of the claims 1-4, wherein the bread improver concentrate is transported from its manufacturing site to a different site at which the mixing of the bread improver concentrate with the oil takes place.

**6.** Fluid oil based bread improver, obtainable by a method according any one of the claims preceding claims. of additional components in particulate form is in the range of 0.5 to 60 wt %, based on the total weight of the concentrate.

**15.** Bread improver concentrate according to any of the claims 7-14 in the shape of a block.

**16.** Method for preparing an oil-based bread improver concentrate according to any one of the claims 7-15, comprising mixing a solid fatty substance with a liquid oil, forming a dispersion of particles of the fatty substance in the oil, and optionally mixing the additional particulate component with the dispersion.

**17.** Method for baking a dough based product, such as bread or pastry, comprising adding a bread improver concentrate or fluid bread improver as defined in any one of the preceding claims to the dough and/or to the contacting area of the dough and the baking device used for baking the product.

**18.** Method according to claim 17, wherein the fluid bread improver is mixed with the dough or with the dough ingredients.

**19.** Method according to claim 17 or 18, wherein the fluid bread improver comprises one or more enzymes.

**20.** Baked product, in particular a bread, obtainable by a method according to any one of the claims 17-19.
